# EUROPEAN PATENT APPLICATION

(11) **EP 1 411 497 A1**
(43) Date of publication of application: **21.04.2004**
(21) Application number: 02079315.4
(22) Date of filing: 18.10.2002
(51) Int. Cl.: G10L 15/28, H04M 3/493

(54) **System and method for hierarchical voice activated dialling and service selection**

(71) Applicant: Koninklijke KPN N.V., 9726 AE Groningen (NL)
(72) Inventor: Van Deventer, Mattijs Oskar, 2264 DL Leidschendam (NL)
(74) Representative: Prins, Adrianus Willem

(57) **Abstract**

The invention is related to an automatic speech recognition system, in particular for use within telecommunications switching systems, providing hierarchically structured set of servers each server being arranged to interpret part of a spoken user request.

## Description

### Field of the Invention

The invention is related to automatic speech recognition systems, in particular for use within telecommunications switching systems, providing hierarchically structured voice dialling services.

### Background of the Invention

Automatic speech recognition is used to provide a user friendly man-machine interface, in particular in situations where the user has no other means available for inputting his request to a computer system. Using automatic speech recognition allows the user to formulate his request in speech. The computer system is enabled to interpret the user spoken request. Automatic speech recognition system are advantageously used in combination with a telephone as input medium.

A particular useful application of automatic speech recognition using a telephone as input medium is a voice dialling system. A voice dialling system is a system where a user can place a telephone call by pronouncing the name of the person or company that he wants to call without having to memorize the exact telephone number. The system automatically recognizes the spoken input of the user and directs the call to the right extension.

Different types of voice dialling systems are known: systems with the speech recognition capability in a handset, and systems with the speech recognition capability on a remote system for example in the local PBX or in the network, where the subscriber can either generate his own directory or use a subscriber independent directory that is available for all subscribers. This kind of system can be used within a company to reach all the employees of that company. But voice dialling systems can also be applied within a broader context, for instance a directory assistance service, where callers call a service number and can reach all registered companies by pronouncing the name of the company. Such a system is described in EP 0955763A2.

These voice dialling systems work satisfactorily as long as the list of available entries is limited. In general the performance of speech recognition systems decreases when the size of the vocabulary increases. A solution for this problem is to design an interactive dialogue with the user of the system, where the user can define his request in two or more steps, represented in a menu structure. An example of this kind of system is presented in WO 00/14729, where the whole vocabulary to be recognized by the speech recognition system is arranged in a tree structure comprising a number of subsets of the vocabulary so that at a given point only part of the whole vocabulary has to be searched. This solution increases the performance of the system, however a major drawback of this solution is that the caller has to go through a number of steps before he reaches his goal, calling to a person or company. Callers tend to be annoyed by these time-consuming dialogues.

A specific problem arises within voice dialling systems when two entries have the same name, for instance when two people called "John Brown" are in the same directory, e.g. work for the same company. The voice dialling system has to query the user about which "John Brown" he wants to call. A similar problem arises when a directory assistance system contains entries for two organisations with the same name, of for instance two branches of the same company. The system needs extra information to decide which entry is the intended entry.

Within the numeric international Telephone Number Plan this problem, i.e. two people having the same local telephone number, is solved by structuring the number plan hierarchically, based on the geographical location of the telephone extensions by using area codes and country codes. Telephone numbers have to be registered to make sure that each telephone number is unique and issued only once. The physical architecture of the telephone network is based on this hierarchical and geographical structure. Telephone switches on different levels in the network only interpret part of the dialled telephone number string, and subsequently determine the next routing step.

Another area where a huge amount of different addresses have to be reached in a user friendly way is the Internet. The Domain Name System (DNS) was designed to provide an alphabetical, easy to remember name to identify users, servers and other entities at the Internet. Each domain name has to be registered to make sure that each domain name is unique and issued only once. The DNS is a global, distributed, tree structured database. There are a lot of DNS servers each capable of interpreting a specific subtree of the whole structure. A full domain name typically takes the form of:
"hostname.entityname.entitycode" or "hostname.entityname.countrycode". DNS Top level domain names include generic categories (.org, .com, .net etc) and
geographic categories (.uk, .nl, .de etc), and are registered and administered by ICANN, subtree registration is delegated to local authorities. There is an important role for the dot (".") in the DNS. The dot functions as a marker for indicating another level of host.

### Problem definition and aim of the invention

Existing speech recognition systems in general and voice dialling systems in particular are limited in their use because they provide no structured and user-friendly means to reach a plurality of extensions for different telecommunication services.

It is an aim of the present invention to provide a hierarchically structured voice dialling and service selection system which is capable of containing a lot of available telecommunication extensions, and wherein the user can formulate his request in a user friendly way.

### Summary of the Invention

In an aspect of the present invention an automatic speech recognition system is provided which makes it possible for the user to formulate his request in a user friendly way without having to go through annoying and time consuming dialogues with a computer system.

This aspect of the present invention is reached by dividing the responsibility for interpreting the full spoken user request over several servers of the system. Each server of the system is capable of interpreting part of the user request. Based on the interpretation of this part each server is able to identify which server will be capable of interpreting another part of the spoken user request.

In a second aspect of the invention, a speech recognition system is disclosed, the speech recognition system being arranged to satisfy a spoken user request comprising a set of servers, where the term server is used to indicate a functionality and not physical presence. So two or more servers might be present on one physical computer system. At least one of said servers comprising:
- means for recognising part of the spoken user request;
- means for requesting another of said servers to analyse said spoken user request based on partial recognition of said spoken user request.

To facilitate the correct interpretation of the spoken user request the automatic speech recognition system is arranged to recognize a spoken user request comprising registered sounds. Registering sounds has the advantage of preventing ambiguity.

Two types of registered sounds can be distinguished:
- Sound Names, which are used to identify an entity, functioning as proper names for for example organisations, departments or individuals.
- Speech Markers indicating the type of entity. A Speech Marker might for example be used to indicate that the next Sound Name is to be interpreted as the name of a department within a company.

In an embodiment of the invention the automatic speech recognition system is arranged as a voice activated dialling and telecommunication service selection system, providing the user for example with the possibility to pronounce the person or company he/she wants to call or send a voice mail message.

To facilitate the correct interpretation of Sound Names and Speechmarkers is advantageous to register a mapping between a combination of Sound Names and Speechmarkers and for example a telecommunication address of an organisation, department or individual. The present invention provides a DNS-type Sound Name system comprising a hierarchically structured set of distributed servers, each of said servers containing a database containing a different set of records providing mappings from a combination of registered Sound Names and Speechmarkers to another one of said servers, and records providing mappings from a combination of registered Sound Names and Speechmarkers to a telecommunication address of an entity. It should be noted that this way of structuring servers is not meant to include the whole world, like in the DNS system. It is also possible to provide a hierarchically structured set of distributed servers for a smaller domain. Where the functionality of different servers might be implemented on one physical computer system.

In yet another embodiment of the invention a voice activated dialling system is arranged to satisfy a spoken user request, comprising:
- a hierarchically structured set of distributed databases, each of said databases containing a different set of records providing mappings from a combination of registered Sound Names and Speechmarkers to another one of said databases, and records providing mappings from a combination of registered Sound Names and Speechmarkers to a telecommunication address of an entity;
- means for recognising part of the spoken user request, facilitated by said mappings;
- means for requesting another one of said databases to analyse said spoken user request based on recognition of said part of said spoken user request.

The invention also relates to a method for providing voice dialling services comprising the steps of:
- storing in a DNS-type set of hierarchically structured distributed databases, records providing mappings from a combination of registered Sound Names and Speechmarkers to another one of said databases, and records providing mappings from a combination of registered Sound Names and Speechmarkers to a telecommunication address of an entity
- receiving a spoken user request;
- recognising part of the spoken user request, facilitated by said mappings;
- requesting another one of said databases to analyse said spoken user request based on recognition of said part of said spoken user request.

Furthermore a method for registering Sound Names and Speech markers is disclosed comprising the steps of:
- defining domains and subdomains;
- delegating the authority for defining Sound Names and Speechmarkers for a subdomain;
- defining and registering the mapping between a combination of Sound Names and Speech markers and telecommunication addresses. This method has as an advantage to facilitate the unambiguous mapping between a combination of Sound Names and Speechmarkers and a telecommunication address.

### Brief Description of the Drawings

Figure 1 shows a system diagram of an embodiment of a Sound Name System according to the invention.
Figure 2 shows the Primary Sound Name Server (11) of fig. 1, acting as a redirect server and acting as a proxy server.
Figure 3 shows a system diagram of an embodiment of a Sound Name Server according to the invention.
Figure 4 shows a system diagram of an exemplary Sound Name Server (30) of fig 3.
Figure 5 shows a flowchart of the process within the exemplary Sound Name Server of figure 4
Figure 6 shows an example of how a user request is processed in a preferred embodiment of a Sound Name System of fig. 1.
Figure 7 shows examples of records contained within the databases of the Sound Name Servers of the Sound Name System of figure 6
Figure 8 shows an example of a Sound Name System delegation tree, indicating how the authority for registering the Sound Names for an embodiment of a Sound Name System (10) of fig. 1 is delegated to different organisations.

### Detailed Description of the Invention

The present invention provides a hierarchically structured automatic speech recognition method and system. For the purpose of the teaching of the invention a preferred embodiment of the system arranged as a voice dialling system will be described.

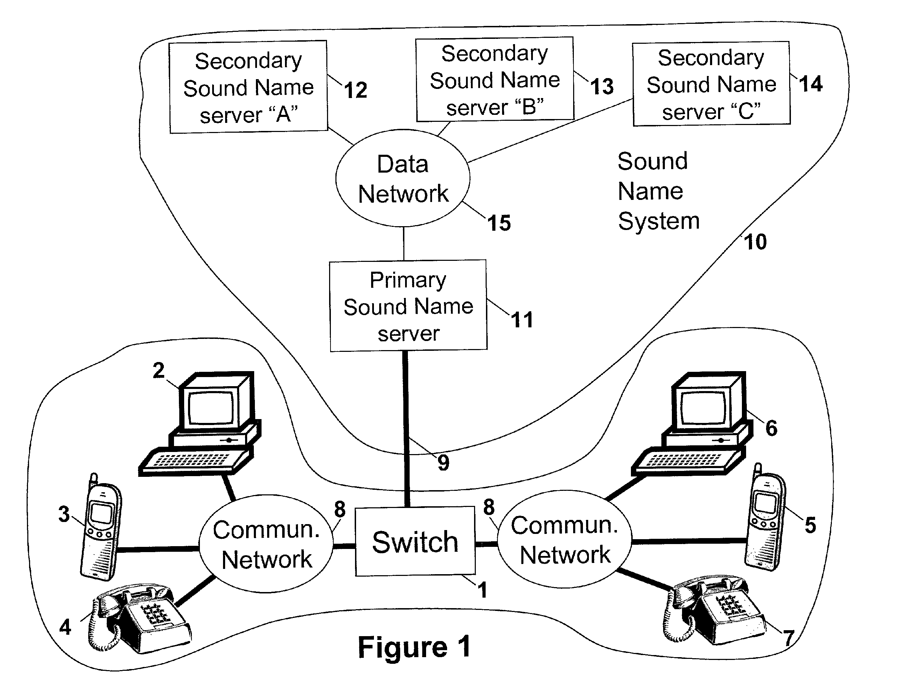

As shown in Figure 1 a telecommunication switch (1) provides communication between several telecommunication terminals (2, 3, 4, 5, 6 and 7). These telecommunication terminals may be fixed or mobile telephones or personal computers. Such personal computers should be provided with a microphone and a loudspeaker in order to allow it to function as a telephone. The telecommunication terminals (2-7) and the telecommunication switch (1) are connected through a communication network (8). This communication network (8) can be either a fixed network, such as e.g. PSTN or ISDN, a mobile network, such as e.g. a GSM or DECT network, or a local network such as e.g. the LAN within a company.

Connected to the telecommunication switch (1) is a Sound Name System (10). The Sound Name System (10) comprises a Primary Sound Name Server (11) and Secondary Sound Name Servers (12, 13, 14). It should be noted that in reality there will be a plurality of Secondary Sound Name Servers. Sound Name Servers (11, 12, 13 and 14) are interconnected through a data network (15), such as e.g. the internet. Notice that the terms "primary" and "secondary" are used to describe the function of a Sound Name Server in a particular context. A Secondary Sound Name Server in one context can function as a Primary Sound Name Server in another context. Notice also that Sound Name Servers are functional entities. One piece of hardware may contain one or more functional Sound Name Servers. On the other hand, the operation of a Sound Name Server may be distributed over multiple pieces of hardware.

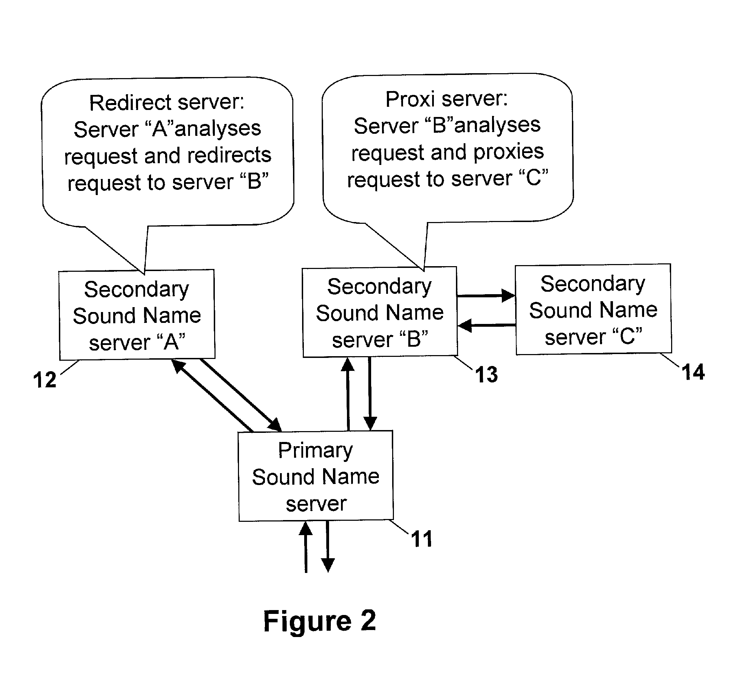

As shown in detail in figure 2, a Sound Name Server can be either a so-called redirect server or a proxi server. Secondary Sound Name Server "A" (12) is a redirect server, which means that if Secondary Sound Name Server "A" (12) receives a request from any other Sound Name Server, it will analyse the request and send the result, in this case the identity of Sound Name Server "B" (13) back to the originating Sound Name Server, Primary Sound Name Server (11), which in his turn will contact Sound Name Server "B" (13) itself. Secondary Sound Name Server "B" (13) is a proxi server, which means that if Secondary Sound Name Server "B" (13) receives a request from any other Sound Name Server, it will analyse the request and send the request directly to the appropriate Secondary Sound Name Server "C" (14). The Primary Sound Name Server (11) usually acts as a proxi server.

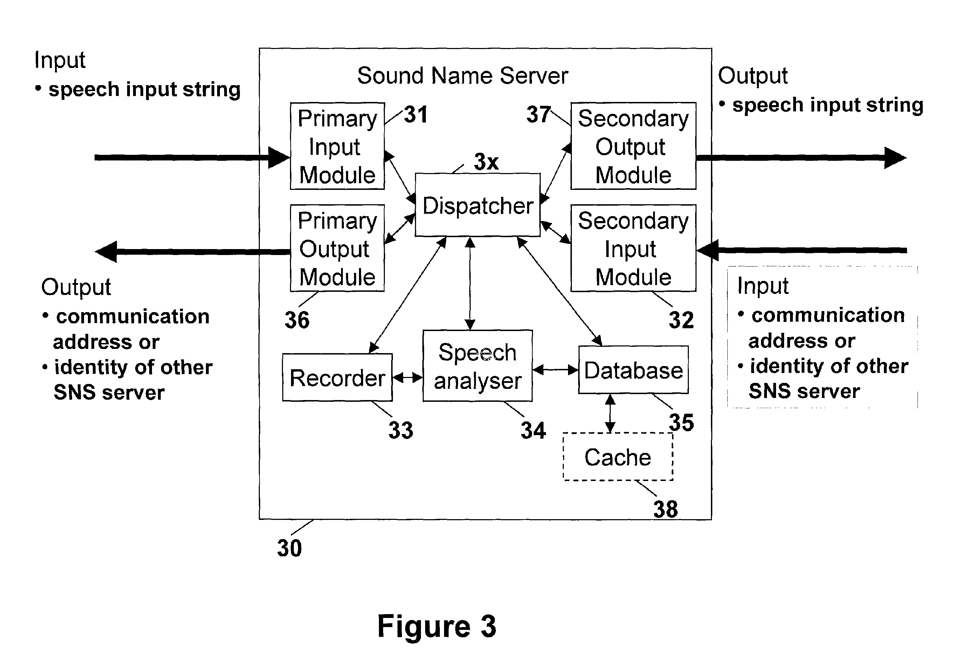

As shown in figure 3, a Sound Name Server (30) comprises a Primary Input Module (31) for receiving a speech input string either life from a user or recorded from a previous Sound Name Server, a Secondary Input Module (32) for receiving a communication address or the identity of another Sound Name Server from a next Sound Name Server, a voice recorder (33) for recording the speech input string from a user, a speech analyser (34) for recognising the speech input, a database (35), a Primary Output Module (36) for returning a communication address or the identity of another Sound Name Server to a previous Sound Name Server or the telecommunication switch, a Secondary Output Module (37) for forwarding a speech recording to a next Sound Name Server, and optionally a cache (38) for storing any received records from a next Sound Name Server for later use. The contents of database (35) differ for each different Sound Name Server, depending on the domain for which the Sound Name Server is responsible of interpreting.

In an embodiment of the invention, to facilitate this process of partly recognizing the speech input string and addressing the next Sound Name Server, the user speech input string comprises a combination of a number of two different types of sounds: Sound Names for uniquely identifying entities and Speech Markers for facilitating the analysis of the speech input string by identifying the function of a Sound Name. Each Sound Name Server is responsible for and capable of interpreting a restricted set of Sound Names and Speech Markers. If a Sound Name Server does not have certain elements of the user input string in its database it sends the speech recording to another Sound Name Server for further analysis.

The speech input string that the user pronounces to formulate his request could be structured like e.g.:
<[service]><person> <[at] department> <[within] company> <[from] city> <[in] country> or:
<[service]><person> <[from] city> <[] state> <[in]country> or:
<[language]><service><person> <[from] city>< [in] country>

Some or all of the elements, indicated by "<...>", of the speech input string may be optional. Each Sound Name Server may have his own defaults for resolving the elements that are not pronounced by the user. E.g. if the user does not pronounce the name of a company, the Sound Name Server of that company assumes that the user means someone from his own company. If the user does not say anything, then his call may be transferred by default to a human operator.

The square brackets "[...]" indicate the presence of Speech Markers. For the system Speech Markers facilitate the analysis of the input string. For example the word [in] can indicate the presence of a geographical area within the input string. Several kinds of Speech Markers can be distinguished:
- service Speech Marker, e.g. [call], [fax], [voicemail] [email], [page], [sms],
- structure Speech Marker, e.g. [in], [from], [at], [within], ...
- language Speech Marker, e.g. [English], [Français], [Deutsch], [Espagñol],
Speech markers can be different in different languages. For instance, the English-language Speech Marker [in] corresponds to the French-language Speech Marker [dans]. Also the word [dot] or silence [] may be used as a Speech Markers. The possibility of using Speech Markers greatly enhances the usability of the system. The user can input his request in a much more natural way than by way of a menu structured dialogue.

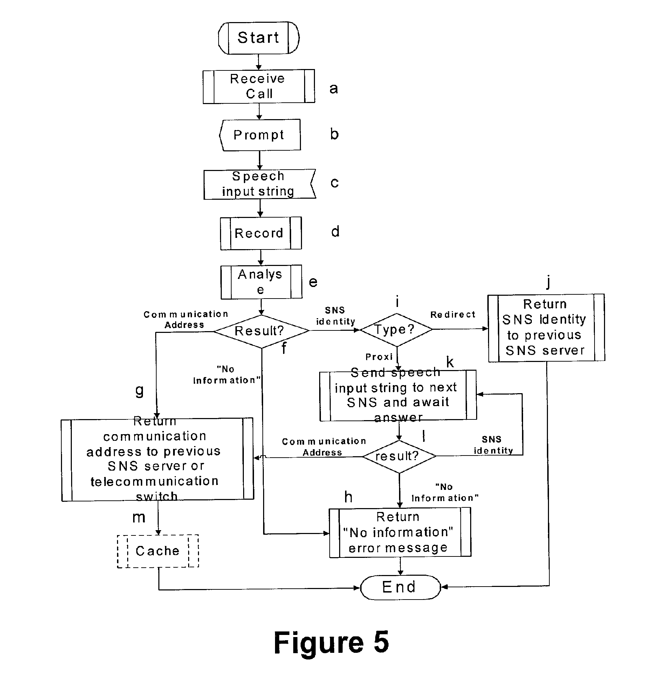

The invention will be further explained with reference to the flowchart in Figure 5, which shows a process within an exemplary Sound Name Server.

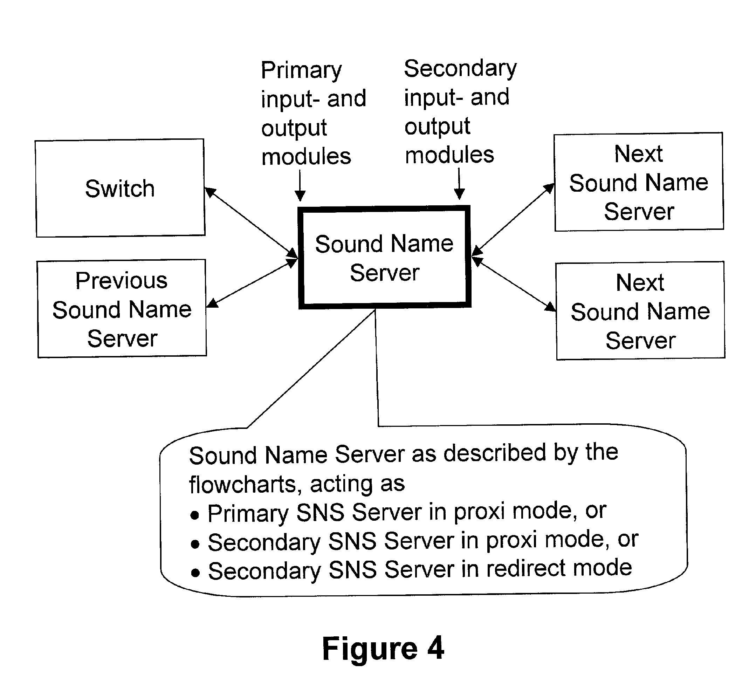

With reference to Figure 4 the described Sound Name Server will be called "SNS X". Figure 4 shows SNS X in its context connected to other Sound Name Servers. Three cases are described: SNS X acting as Primary Sound Name Server in proxi mode, SNS X acting as Secondary Sound Name Server in proxi mode, and SNS X acting as Secondary Sound Name Server in redirect mode.

First (step a), if SNS X itself acts as a Primary Sound Name Server, then it receives a call and prompts the caller to formulate his request (step b), the caller either states the full name of an entity he wants to reach, e.g. or he can suffice with part of the full name and the system will take some items as default (step c).

In step d, SNS X records the received speech input string. If SNS X itself acts as a Secondary Sound Name Server, then it would receive the recorded input from a previous Sound Name Server.

In step e, SNS X analyses the received speech input string. For this analysis SNS X compares the different elements of the speech input string with the available records in the database.

In decision step f, SNS X uses the result of the analysis for a decision. If the result is the identity of a next Sound Name Server, then the SNS X continues with step i. If the result is a communication address, then the SNS X continues with step g. If the result is that the database did not contain the requested information, then the SNS X continues with step h.

Step i is a check whether the SNS X itself acts as a proxi- or as a redirect server. A Primary Sound Name Server usually acts as proxi server. A Secondary Sound Name Server may act as proxi server or as redirect server. If the SNS X acts as redirect server then it continues with step j. If SNS X acts as proxi server then it continues with step k.
In step j, SNS X returns the identity of the next Sound Name Server to the previous Sound Name Server from which it received the speech input string. After this, the SNS X returns to the idle state.

In step k, SNS X sends the speech input string to the identified next Sound Name Server.

In step I, SNS X uses the result of the next Sound Name System for a decision. If the result is the identity of a next Sound Name Server, then the Sound Name Server (recursively) continues with step k. If the result is a communication address, then the SNS X continues with step g. If the result is that the database did not contain the requested information, then the SNS X continues with step h.

In step g, if SNS X itself acts as a Primary Sound Name Server, then it would instruct the telecommunication switch to through-connect the caller to the resulting communication address. If SNS X itself acts as a Secondary Sound Name Server, then it would return the resulting communication address to the Previous Sound Name Server from which it received the speech input string. Optionally, the SNS X may cache any received records from a Sound Name Server in its Database for later use (step m). After this, the SNS X returns to the idle state.

In steps h, a Primary Sound Name Server would prompt the caller and instruct the telecommunication switch to disconnect the caller. If SNS X itself acts as a Secondary Sound Name Server, then it would return an error message indicating that its database did not contain the requested information to the previous Sound Name Server from which it received the speech input string. After this, the SNS X returns to the idle state.

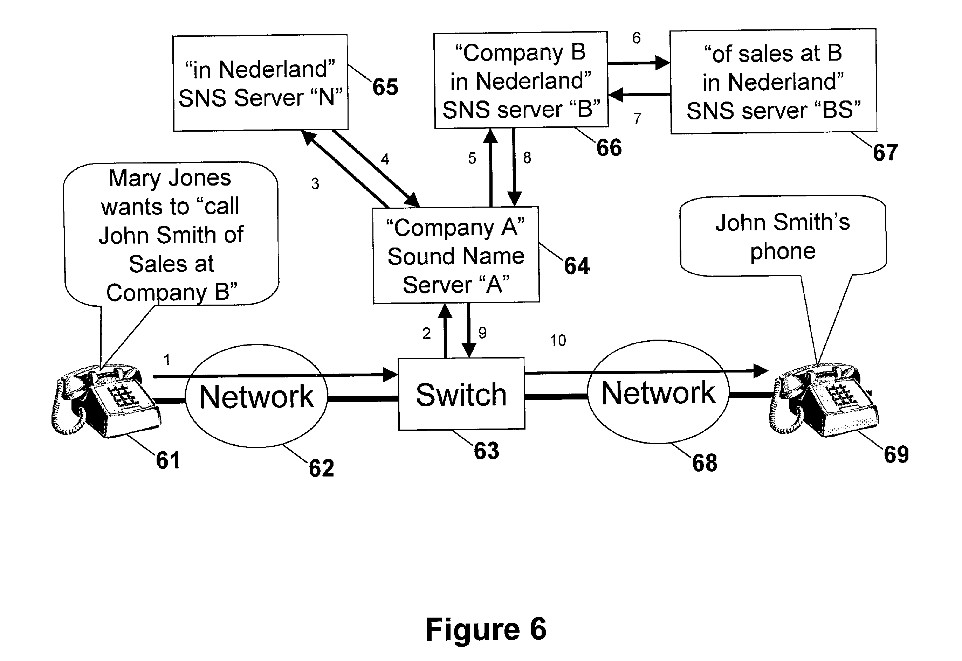

In figure 6 the invention is further explained by way of an example of a call request made by a caller. Caller Mary Jones (61) accesses the Sound Name System through a network (62) and a telecommunication switch (63). Mary Jones who works at Company A, says "Call John Smith of Sales at Company B". The speech input string is first analysed by the callers own Primary Sound Name Server A (SNS A)(64). SNS A recognizes as default "in the Netherlands" and sends the speech recording to Sound Name Server N (SNS N)(65). SNS N recognizes "at Company B" and redirects to Sound Name Server B (SNS B)(66). SNS A contacts SNS B. SNS B recognizes "of Sales" and contacts Sound Name Server BS (SNS BS)(67). SNS BS recognizes "John Smith" and returns the requested telephone number. SNS B returns the telephone number to SNS A. SNS A instructs the telecommunication switch to dial the returned telephone number. Mary Jones from company A is connected to John Smith of company B.

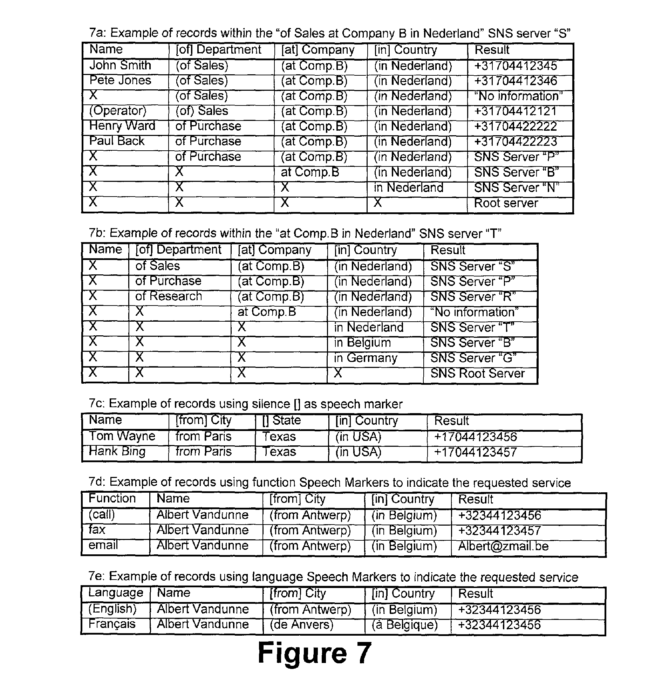

Figure 7 shows some examples of the records within the database of a Sound Name Server. The records are structured to an input part with Sound Names and Speech Markers using a format discussed above and an output part that can be an communication address (telephone number, email address), the identity of an other SNS server or an error indication that the Sound Name Server does not recognize a Sound Name. The input part may also have function Speech Markers, language Speech Marker or use the silence Speech Marker. The "X" indicates the cases where a particular Sound Name is not recognised or not present in the Database. The round brackets "(...)" indicate that the indicated Sound Name is default and may be absent.

A Sound Name System functions better if the Sound Names and Speech Markers within a system have a clear and predefined meaning. Therefore it is advantageous to provide a central registration entity to register Sound Names and Speech Markers.

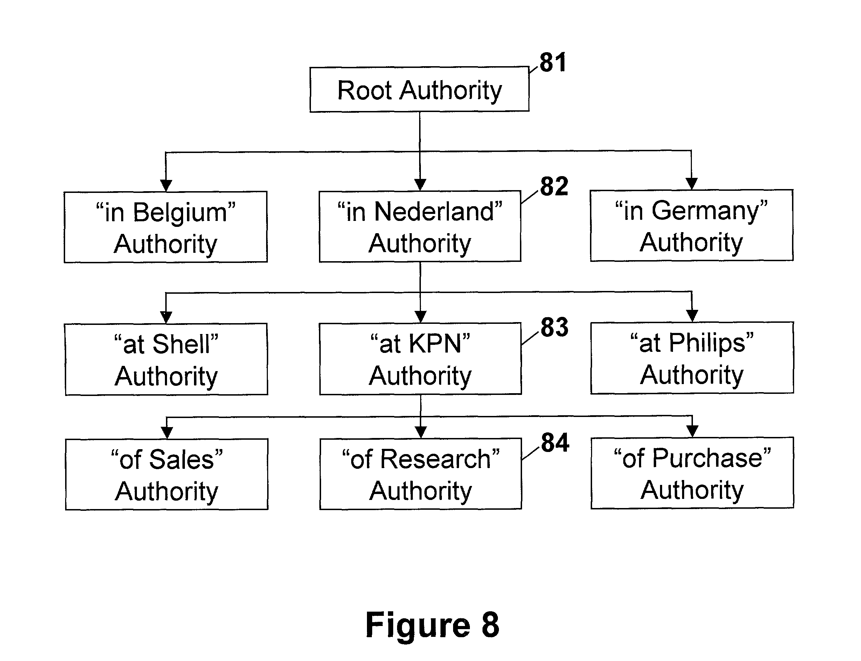

The Sound Names within the Sound Name System are organised in a tree like way. As shown in Figure 8 each Sound Names System has an SNS Root, which itself has no explicit name, and an associated SNS Root Authority (81). The SNS Root Authority (81) delegates the responsibility of Sound Name Domains, like <[in] country> or <[at] company> to lower authorities, for example the SNS "[in] Nederland" Authority (82). Recursively, these lower authorities can in turn delegate the responsibility of sub-Sound Name Domains to yet lower authorities, like the SNS "[at] KPN [in] Nederland" Authority (83) or the SNS "[of] Research [at] KPN [in] Nederland" Authority (84). Each Authority is responsible for a Sound Name Service that can recognise the relevant Sound Names of the Sound Name Domain for which it is responsible. This is similar to the central and local registration entities for telephone numbers and domain names.

Notice that multiple Sound Name Systems (system of primary and associated secondary Sound Name Servers) may exist concurrently, each having its own central registration entity and delegated local registration entities.

## Claims

1. A speech recognition system being arranged to satisfy a spoken user request comprising a set of servers, at least one of said servers comprising:
- means for recognising part of the spoken user request;
- means for requesting another of said servers to analyse said spoken user request based on partial recognition of said spoken user request.

2. A system according to claim 1 wherein said system is arranged to recognize a spoken user request comprising registered sounds.

3. A system according to claim 2 wherein the registered sounds are Sound Names, identifying an entity, and Speech Markers indicating the type of entity.

4. A system according to claim 1-3 wherein said system is arranged as a voice activated dialling and telecommunication service selection system.

5. A DNS-type Sound Name system comprising a hierarchically structured set of distributed servers containing databases, each of said databases containing a different set of records providing mappings from a combination of registered Sound Names and Speechmarkers to another one of said servers, and records providing mappings from a combination of registered Sound Names and Speechmarkers to a telecommunication address of an entity.

6. A voice activated dialling system being arranged to satisfy a spoken user request, comprising:
- a hierarchically structured set of distributed servers containing databases, each of said databases containing a different set of records providing mappings from a combination of registered Sound Names and Speechmarkers to another one of said databases, and records providing mappings from a combination of registered Sound Names and Speechmarkers to a telecommunication address of an entity;
- means for recognising part of the spoken user request, facilitated by said mappings;
- means for requesting another one of said servers to analyse said spoken user request based on recognition of said part of said spoken user request.

7. A method for providing voice dialling services comprising the steps of:
- storing in a DNS-type set of hierarchically structured distributed databases, records providing mappings from a combination of registered Sound Names and Speechmarkers to another one of said databases, and records providing mappings from a combination of registered Sound Names and Speechmarkers to a telecommunication address of an entity
- receiving a spoken user request;
- recognising part of the spoken user request, facilitated by said mappings;
- requesting another one of said databases to analyse said spoken user request based on recognition of said part of said spoken user request.

8. A method for registering Sound Names and Speech Markers comprising steps of:
- defining domains and subdomains;
- delegating authority for defining Sound Names and Speechmarkers for a subdomain;
- defining and registering the mapping between a combination of Sound Names and Speechmarkers and telecommunication addresses.
